# EUROPEAN PATENT SPECIFICATION

(11) **EP 3 106 017 B1**
(45) Date of publication and mention of the grant of the patent: **01.07.2020**
(21) Application number: 16166128.5
(22) Date of filing: 22.05.2014
(51) Int. Cl.: A01D 75/20, A01D 78/10, A01D 80/00

(54) **AGRICULTURAL MACHINE, IN PARTICULAR A HAYMAKING MACHINE**
LANDWIRTSCHAFTLICHE MASCHINE, INSBESONDERE EINE HEUERNTEMASCHINE
MACHINE AGRICOLE, NOTAMMENT UNE MACHINE DE FENAISON

(30) Priority: 11.07.2013 NL 2011137
(43) Date of publication of application: 21.12.2016
(62) Divisional of application: 14169421.6
(73) Proprietor: Forage Company B.V., 3147 PB Maassluis (NL)
(72) Inventor: VAN DEN ENGEL, Alfonsus Jacobus, 3147 PA Maassluis (NL)
(74) Representative: AGCO Intellectual Property Department

(56) References cited:
- EP-A1- 2 179 641
- EP-A1- 2 591 653
- EP-A2- 0 316 559
- DE-U1- 8 712 165
- GB-A- 2 210 242

## Description

The invention relates to an agricultural machine, in particular to a haymaking machine comprising a frame which is configured to be attached to a vehicle in order to move the agricultural machine in a normal direction of travel, a bearing arm construction having at least one bearing arm, which bearing arm construction is connected to the frame so as to be pivotable about one or more pivot axes, and a plurality of processing members with processing elements for working the land or processing a crop, wherein the processing members are at least displaceable between an operating position and a transport position by pivoting the bearing arm construction about the one or more pivot axes.

In the operating position, the processing elements are positioned in such a manner that they can work the land or process the crop over which the agricultural machine moves, for example rake or ted grass. In the transport position of the processing members, the processing members are folded and supported on the frame so that they are in a position which is convenient for transportation.

However, in the transport position, the processing elements, for example teeth or tines, can protrude towards one side of the agricultural machine and thus cause a risk of injury for people or animals and/or of damage to objects. Such a risk of injury and/or damage is undesirable.

To avoid or at least substantially decrease the risk on injury and/or damage, the agricultural machine may comprise a movable shielding construction to at least partially shield the processing members in the transport position. In a known embodiment from EP 2 591 653 A1, the movable shielding construction comprises two shielding beams located at opposite sides of the agricultural machine.

The shielding beams are pivotable about a horizontal axis running parallel to the normal direction of travel of the agricultural machine between a shielding position and a lower position. In the shielding position the shielding beams are at least partially arranged at the same height as the processing members in the transport position to shield at least partially the processing members.

However, the desired height of the shielding beams may prevent or hinder movement of the processing members between the operating position and the transport position. By moving the shielding beams to the lower position, the shielding beams may no longer hinder or prevent movement of the processing members between the operating position and the transport position.

A drawback of the known embodiment, is that the shielding beams do not shield the processing members at opposite sides of the agricultural machine close to and/or even up to the back end of the agricultural machine, since the presence of the processing members in the operating position prevent the arrangement of a shielding beam at the sides close by and/or up to the back end of the agricultural machine, even when arranged in the lower position.

Furthermore, EP 2 179 641 A1 discloses an agricultural machine with a barrier device which comprises a band, a winding device and a fastening device, such that the band when fastened runs at the same height as the processing members of the agricultural device.

It is an object of the invention to provide an agricultural machine in which the risk of injury and/or damage by protruding parts of the processing members, in particular the processing elements, in the transport position is removed or at least reduced.

It is a further object of the invention to provide an agricultural machine comprising a movable shielding construction having two shielding beams located at opposite sides of the agricultural machine, which shielding beams extend, in the shielding position, close by and/or up to the back end of the agricultural machine.

The invention provides an agricultural machine comprising:
- a frame which is configured to be attached to a vehicle in order to move the agricultural machine in a normal direction of travel,
- a bearing arm construction having at least one bearing arm, which bearing arm construction is pivotably connected to the frame so as to be pivotable about one or more pivot axes, and
- a plurality of processing members with processing elements for working the land or processing a crop, wherein the processing members are at least displaceable between an operating position and a transport position by pivoting of the least one bearing arm construction is connected to the frame so as to be pivotable about the one or more pivot axes,
wherein the agricultural machine comprises a movable shielding construction to at least partially shield the processing members in the transport position, wherein the movable shielding construction comprises two shielding beams located at opposite sides of the agricultural machine, wherein the shielding beams are movable between a shielding position for shielding at least partially the processing members, and a lower position in which movement of the processing members between the operating position and the transport position is possible, wherein the movable shielding construction is configured to move the shielding beams upwards and backwards with respect to the normal direction of travel when the shielding beams are moved from the lower position to the shielding position,
characterized in that the movable shielding construction (11) comprises at each side two pivotable link arms (17, 18) connecting the respective shielding beam (12) to the frame (2), wherein the frame, link arms and shielding beam, at each side of the agricultural machine, form a planar four-bar linkage.

By providing shielding beams at opposite sides of the agricultural machine, that also move backwards, i.e. in a direction opposite to the normal travel direction, during a movement from the lower position to the shielding position, the shielding beams will reach, in the shielding position, further to the back end of the agricultural machine than shielding beams that only move upwards when moved from the lower position to the shielding position. In this way the shielding of processing members may be improved without the shielding beams hindering operation of the processing members, when the processing members are arranged in the operating position and/or without the shielding beams hindering movement of the processing members between the operating position and the transport position.

It will be clear that the shielding beams will move downwards and forwards with respect to the normal direction of travel when the shielding beams are moved from the shielding position to the lower position.

The movement of the shielding beams may be a helical movement about a longitudinal axis of the machine, such that movement of the shielding beams from the lower position to the shielding position results in an upwards movement and a backwards movement. In an alternative embodiment, the movable shielding construction may comprise a first axis of rotation to rotate the shielding beams between a lower position and a higher position and a second axis of rotation to move the shielding beams forwards and backwards with respect to the normal direction of travel of the machine.

The agricultural machine may be any machine having processing members to be shielded in a transportation position to shield the proccesing members, such as for example a hay making machine, a soil cultivation machine, a planting machine or harvesting machine having such processing members. In some embodiments, the processing members may be movably, in particular rotatably, connected to the bearing arm construction.

In an embodiment, the movable shielding construction is configured to move the shielding beams in a substantially vertical plane between the lower position and the shielding position. By movement of the shielding beams within a substantially vertical plane, the shielding beams remain relatively close to the frame.

It is remarked that in an alternative embodiment of a movable shielding construction, the movable shielding construction may be configured to move the shielding beams in a substantially vertical plane between the lower position and the shielding position, while the shielding beams are not moved backwards with respect to the normal direction of travel when the shielding beams are moved from the lower position to the shielding position.

For example, the shielding beams are only moved upwards and downwards with respect to the frame, or the shielding beams may also move forwards, when the shielding beams are moved from the lower position to the shielding position.

In an embodiment, the movable shielding construction is configured to move the shielding beams in a slanted plane between the lower position and the shielding position. The slanted plane is a plane which is arranged at an acute angle with a horizontal plane, preferably in the range of 20 to 80 degrees, preferably 30 degrees to 70 degrees with the horizontal plane. Further, the slanted plane is preferably substantially parallel to the normal direction of travel.

In an embodiment, the movable shielding construction is configured to move the shielding beams towards each other when the shielding beams are moved from the lower position to the shielding position, and/or the movable shielding construction is configured to move the shielding beams towards a central longitudinal symmetry axis of the agricultural machine when the shielding beams are moved from the lower position to the shielding position. This movement provides further possibilities to displace the shielding beams between a shielding position where they provide proper shielding of the processing members, and a lower position in which the shielding beams do not interfere proper functioning of the hay making machine, and in particular do not hinder movement of the processing members between the operating position and the transport position.

For example, when the shielding beams move in slanted planes between the lower position and the shielding position, the slanted planes in which the shielding beams at opposite sides of the machine move, may intersect at a higher level than where the movement of the shielding beams between the lower position and the shielding position in the slanted planes is performed. As a result, and in addition to the upwards and backwards movement, the shielding beams will move towards each other when the shielding beams are moved from the lower position to the shielding position.

It will be clear that in this embodiment the shielding beams will move downwards and forwards with respect to the normal direction of travel as well as away from each other, when the shielding beams are moved from the shielding position to the lower position.

In an embodiment, the shielding beams, in the shielding position, extend at the backside of the agricultural machine beyond the processing members in the transport position. By moving the shielding beams in the backwards direction beyond the processing members, the shielding beams may not only provide protection at the opposite sides of the agricultural machine, but also at the back end corners of the agricultural machine.

According to the present invention, the movable shielding construction comprises at each side two pivotable link arms connecting the respective shielding beam to the frame, the frame, link arms and shielding beam forming a planar four-bar linkage.

A planar four-bar linkage, in particular a parallelogram four-bar linkage, provides a suitable construction for moving the shielding beams between the lower position and the shielding position. The pivotable link arms, which preferably have substantially the same length, may provide a movement in both the upwards and the backwards direction, when the shielding beams are moved from the lower position to the shielding position. Furthermore, the four-bar linkage may be configured such that the shielding beams run substantially horizontally in both the lower position and the shielding position.

Also, the planar four-bar linkage can be used to move the shielding beams in a substantially vertical plane between the lower position and the shielding position. Other means to move the shielding beams in a substantially vertical plane between the lower position and the shielding position may comprise linear actuators and/or guiding elements, or any other suitable device.

By selection of the angle of the pivot axes of the pivotable link arms, the ratio of displacement in upwards, sidewards and backwards direction of the shielding beams in the movement from the lower position to the shielding position can be set.

In an embodiment, the pivotable link arms are pivotable about pivot axes substantially perpendicular to the normal direction of travel to obtain a movement of the shielding beams between the lower position and the shielding position in a substantially vertical plane. In such embodiment, there is no sideward movement of the shielding beams with respect to the frame during movement between the lower position and the shielding position.

In an alternative embodiment, the pivotable link arms are pivotable about pivot axes extending in a substantially vertical plane and arranged at an acute angle with respect to the normal direction of travel to obtain a movement of the shielding beams in a slanted plane between the lower position and the shielding position. Any other angle of the pivot axes of the link arms to obtain a desired movement between a lower position and a shielding position may also be used.

In an embodiment, the movable shielding construction comprises an actuator to move the movable shielding construction between the lower position and the shielding position. An actuator, preferably a hydraulic linear actuator, may be provided to move the shielding beams between the lower position and the shielding position.

In an alternative embodiment, the movable shielding construction may be mechanically linked to a movable part of a bearing arm construction such that when the bearing arms are moved from the operating position to the transport position, the shielding arms are moved from the lower position to the shielding position, preferably at the end of the movement of the bearing arms, and that, when the bearing arms are moved from the transport position to the operating position, the shielding arms are moved from the shielding position to the lower position, preferably at the beginning of the movement of the bearing arms.

In an embodiment, the movable shielding construction comprises a drive mechanism to transfer an actuator movement of the actuator into movement of the movable shielding construction between the lower position and the shielding position.

The drive mechanism may be used to transfer movement of the actuator. In case of a four-bar linkage for each shielding beam at opposite sides of the agricultural machine, the drive mechanism may be formed by at least one drive axle configured to rotate at least one of the link arms in order to move the respective shielding arm between the shielding position and the lower position. A connection rod may be connected between the drive axle and one or more second drive axles to transfer the actuator movement to another link arm. To transfer rotation of the drive axle to the second drive axle, the connection rod may be placed between two rotation transfer arms mounted on each of the drive axle and the second drive axle.

Preferably, the drive axle is mechanically connected to a first pair of link arms at opposite sides of the agricultural machine, and two second drive axles are mechanically connected to each of a second pair of link arms arranged at opposite sides of the agricultural machine.

In an embodiment, the link arms are arranged perpendicular to the respective drive axle or second drive axle. Further, the link arms may be integrally formed with the respective drive axle or second drive axle.

In a non-claimed embodiment, the agricultural machine comprises a safety device configured to prevent that the processing members can be moved between the operating position and the transport position, when the movable shielding construction is arranged in the shielding position.

Since the shielding beams in the shielding position may hinder movement of the processing members between the operational position and the transport position, it is undesirable that this movement is performed when the shielding beams are positioned in the shielding position. By providing a suitable safety device it may be prevented that the processing members can be moved between the operating position and the transport position, when the movable shielding construction is arranged in the shielding position. As a result, the risk on damage of the processing members and/or movable shielding construction is prevented or at least substantially reduced.

In a non-claimed embodiment, the safety device comprises a shut-off valve arranged in a hydraulic drive circuit of the bearing arm construction, wherein the shut-off valve is movable between a closed position and an open position, and wherein the shut-off valve is mechanically linked to the movable shielding construction so that the shut-off valve in the closed position when the shielding beams are in the shielding position, and the shut-off valve is arranged in the open position when the shielding beams are in the lower position.

In an embodiment, the movable shielding construction comprises an elongate shielding element connecting the two opposite shielding beams to shield the front side of the processing members in transport position. The shielding beams provide for shielding of the processing members at the opposite sides and, optionally, at the back end corners of the agricultural machine. However, the front side may be at least partially unprotected by the shielding beams. In particular, since the shielding beams also move backwards and forwards, additional protection at the front side may be desirable. An elongate shielding element may be provided to provide such additional protection at the front side of the processing members in transport position, i.e. at the front end and/or front part of the sides of the agricultural machine.

In an embodiment, a front side of the elongate shielding element is pivotably mounted at a fixed location with respect to the frame, wherein both ends of the elongate shielding element are slidably connected to the shielding beams.

By mounting a front side of the elongate shielding element at the front side at a fixed location, the front end of the movable shielding construction remains at a substantially constant location with respect to the frame, and it is avoided that in the lower position the elongate shielding element is moved relatively far in the forwards direction, without any shielding or such being required.

Generally, it is undesirable that the elongate shielding element is moved relatively far in the forward direction as it may interfere with a pulling vehicle of the agricultural machine, in particular when the combination of pulling vehicle and agricultural machine makes a turn, and the pulling vehicle and agricultural machine are in an angled position with respect to each other.

Further characteristics and advantages of the invention will now be elucidated by a description of an embodiment of the invention, with reference to the accompanying drawing, in which:
- Figure 1 shows a side view of a haymaking machine according to a first embodiment of the invention with shielding beams in the lower position;
- Figure 2 shows a side view of the haymaking machine of Figure 1 with shielding beams in the shielding position;
- Figure 3 shows a back end view of the haymaking machine of Figure 1 with shielding beams in the lower position;
- Figure 4 shows a back end view of the haymaking machine of Figure 1 with shielding beams in the shielding position; and
- Figure 5 shows a perspective view of the haymaking machine of Figure 1 without bearing arm construction and processing members and with shielding beams in the lower position; and
- Figure 6 shows a perspective view of the haymaking machine of Figure 1 without bearing arm construction and processing members and with shielding beams in the shielding position.
- Figure 7 shows a side view of a haymaking machine according to a second embodiment of the invention with shielding beams in the lower position;
- Figure 8 shows a side view of the haymaking machine of Figure 7 with shielding beams in the shielding position;
- Figure 9 shows a back end view of the haymaking machine of Figure 7 with shielding beams in the lower position;
- Figure 10 shows a back end view of the haymaking machine of Figure 7 with shielding beams in the shielding position; and
- Figure 11 shows a perspective view of the haymaking machine of Figure 7 without bearing arm construction and processing members and with shielding beams in the lower position; and
- Figure 12 shows a perspective view of the haymaking machine of Figure 7 without bearing arm construction and processing members and with shielding beams in the shielding position.

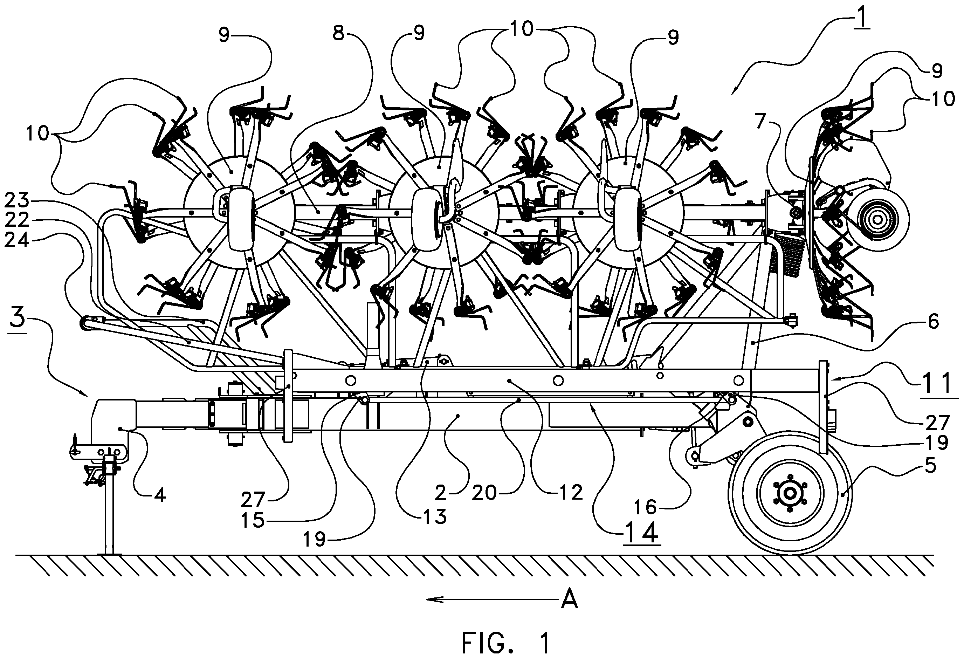

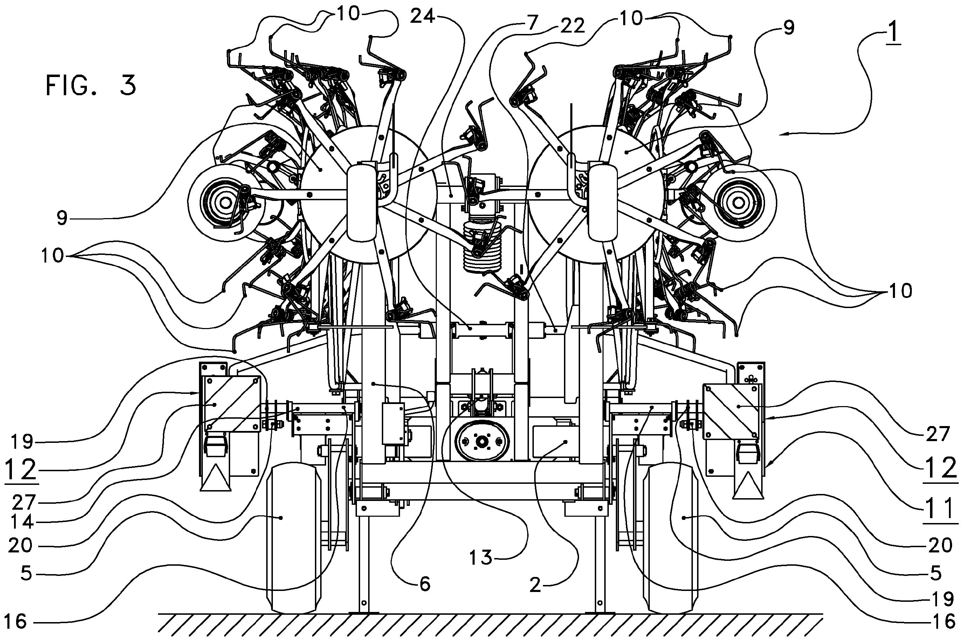

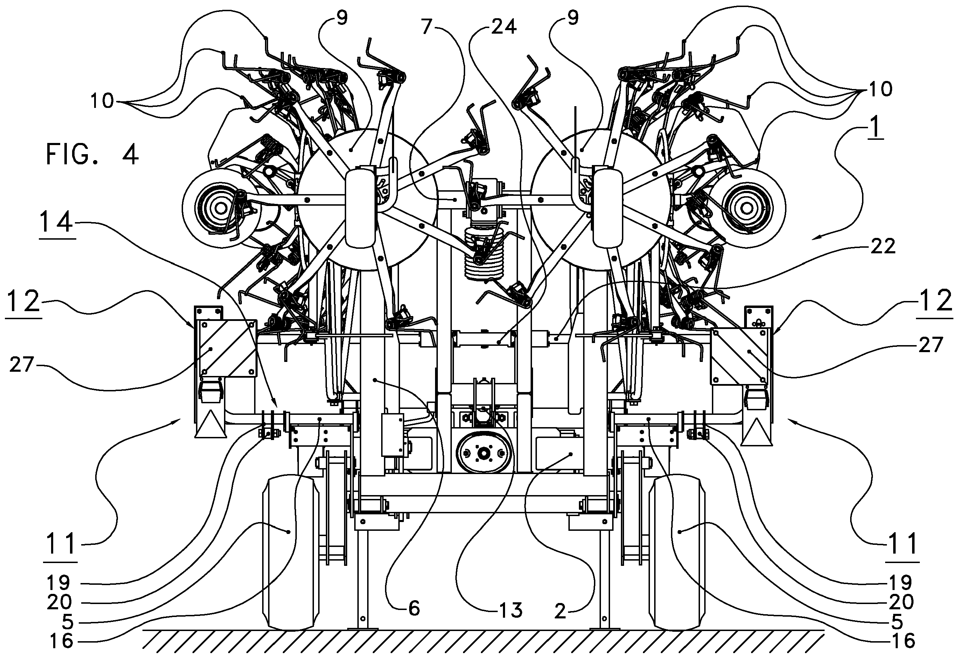

Figures 1 - 4 show side views and back end views of an embodiment of a haymaking machine according to the invention which is denoted overall by reference numeral 1.

The haymaking machine 1 is configured to ted a crop and has an elongate frame 2. At a front end 3 of the frame 2, a device 4 is provided for coupling the haymaking machine 1 to a pulling vehicle, such as a tractor (not shown). At the rear end of the agricultural machine 1, wheels 5 are provided for supporting the haymaking machine 1. When the haymaking machine 1 is coupled to a tractor or the like, it can be pulled in a normal direction of travel during operation, which normal direction of travel is indicated in Figure 1 by arrow A. The agricultural machine 1 comprises a bearing arm construction pivotable about a number of pivot axes to move the bearing arm construction between the operating position and the transport position. The bearing arm construction comprises a pivotable bearing arm support frame 6, a central bearing arm part 7 and two bearing arms 8. The pivotable bearing arm support frame 6 is pivotable mounted on the frame 2 and pivotable supports a central bearing arm part 7 which in its turn pivotably is connected to the two bearing arms 8.

The central bearing arm part 7 and the two bearing arms 8 support a number of crop-processing members 9. The two bearing arms 8 with processing members 9 are arranged substantially symmetrically with respect to the frame 2. The processing members 9 are arranged rotatably about shafts which are attached to one of the central bearing arm part 7 and the two bearing arms 8. The crop-processing members 9 comprise a number of processing elements 10, such as teeth, tines or the like, which are arranged around the circumference of the processing members 9.

The bearing arm construction is movable to move the processing members 9 between an operating position and a transport position. In the operating position (not shown) the processing members 9 are positioned near the ground in a substantially straight line perpendicular to the normal direction of travel, in such a manner that the processing elements 10 can process crop situated on the ground. In the transport position, the bearing arms 9 are folded towards each other and supported by the frame 2, as is illustrated in Figures 1-4.

In the transport position, it is desirable that the entire haymaking machine 1 remains substantially within the maximum dimensions which are often imposed by the relevant authorities and government bodies with regard to such machines during transportation. In certain countries, for example, the agricultural machine is only allowed to have a maximum height of four meters and a maximum width of three meters in the transport position. It is desirable that the relatively large crop-processing members 9 are optimally situated so that they remain within the prescribed dimensions in the operating position.

In the transport position, the processing members 9 are folded up in order to take up a position which is convenient for transportation. This transport position may result in the processing elements 10 protruding sideways from the haymaking machine 1 and thus causing a potential risk of injury to people or animals or of damage to objects.

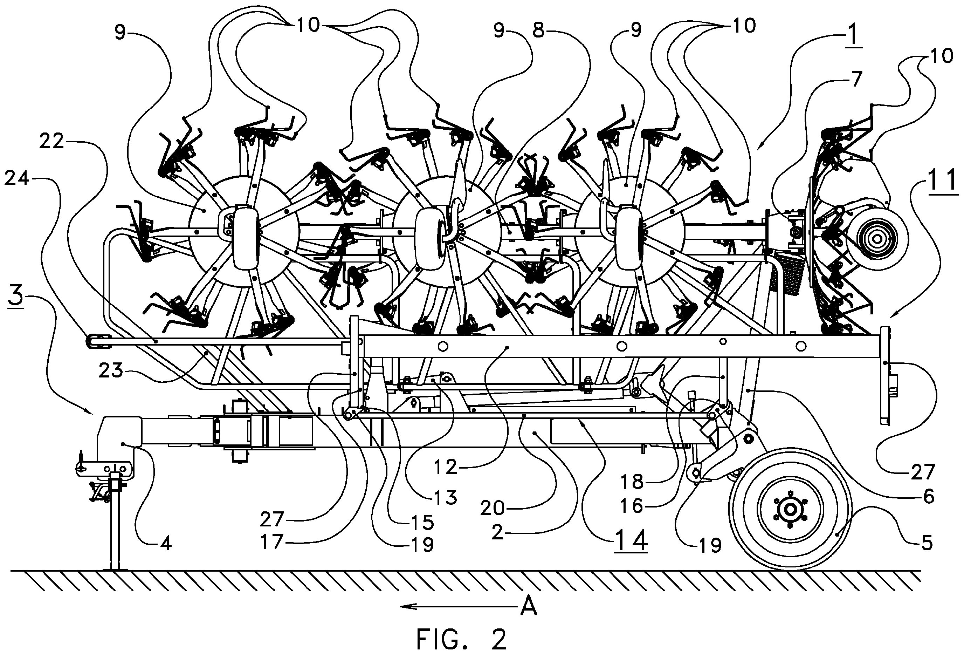

In order to prevent this risk, or at least reduce it, the agricultural machine 1 comprises a movable shielding construction 11. The shielding construction 11 comprises at each of opposite sides of the agricultural machine 1 a shielding beam 12 movable between a lower position, shown in Figures 1, 3 and 5, and a shielding position, shown in Figures 2, 4 and 6.

In the shielding position, the shielding beams 12 are arranged at a height in the range from 1 meters up to 2 meters, preferably at a height in the range from 1.2 meters to 1.7 meters. In this height range, the shielding beams 12 may prevent that a person is directly hit by one the processing elements 10.

However, this desired height of the shielding beams 12 may prevent or hinder movement of the processing members between the operating position and the transport position. By moving the shielding beams 12 to the lower position, the shielding beams 12 may no longer hinder or prevent movement of the processing members between the operating position and the transport position.

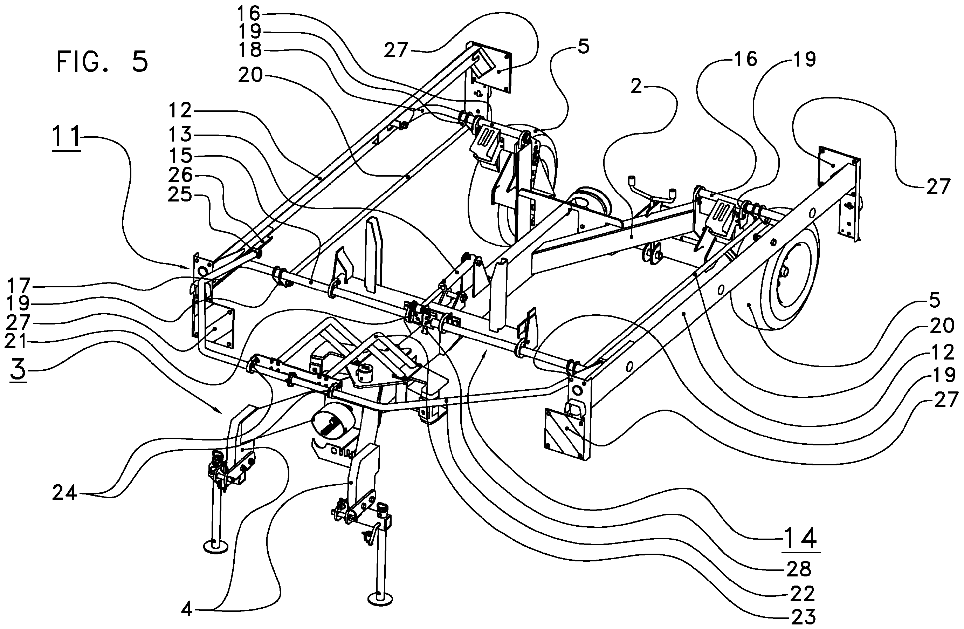

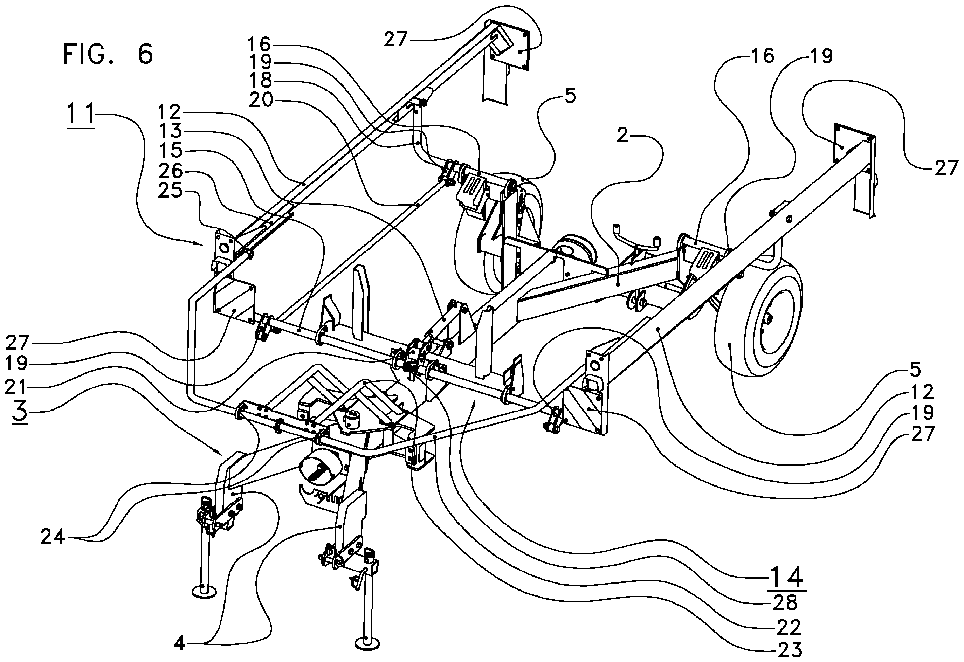

To move the shielding beams 12 between the lower position and the shielding position, a hydraulic linear actuator 13 and a drive mechanism 14 are provided, as more clearly shown in Figures 5 and 6. The drive mechanism 14 comprises a first drive axle 15 and two second drive axles 16.

At each end the first drive axle 15 a front link arm 17 is integrally formed, perpendicularly to the longitudinal direction of the first drive axle 15. The outer ends of the second drive axles 16 are each integrally formed with a back link arm 18 perpendicularly to the longitudinal direction of the second drive axle 16. The free ends of the front link arms 17 and the back link arms 18 are pivotably connected to one of the shielding beams 12.

On the first drive axle 15 two rotation transfer arms 19 and also on each of the two second drive axles 16 a rotation transfer arm 19 is mounted. Each rotation transfer arm 19 of the second drive axle 16 is connected with a connection rod 20 to a rotation transfer arm 19 of the first drive axle 15.

The actuator 13 is mechanically connected to the first drive axle 15 by a rotation arm 21. Extension and retraction of the actuator 13 results in rotation of the first drive axle 15 and, as a result, in a tilting movement of the front link arms 17. Furthermore, rotation of the first drive axle 15 results in a rotation of the second drive axles 16 via the rotation transfer arms 19 and the connection rods 20. The rotation of each of the second drive axles 16 in its turns results in a tilting movement of the back link arms 18.

The frame 2, the front link arm 17, the back link arm 18 and the shielding beam 12, at each side of the agricultural machine 1 form a four-bar link mechanism. By simultaneous tilting movements of the front link arm 17 and the back link arm 18, at one side of the agricultural machine 1 will result in that the shielding beam 12 at that side will move between the shielding position and the lower position, wherein the shielding beam 12 remains orientated substantially horizontally.

In the movements of the shielding beams 12 between the lower position and the shielding position, the shielding beams remain in a substantially vertical plane. This has the advantage that the shielding beams remain both in the lower position and the shielding position relatively close to the frame.

In the lower position, as also shown in Figure 5, the front link arms 17 and back link arms 18 are directed substantially horizontally and in the normal direction of movement A. In the shielding position, the front link arms 17 and back link arms 18 are directed substantially vertically and upwards. Thus, when the shielding beams 12 are moved from the lower position to the shielding position, the shielding arms 12 are moved upwards and backwards, i.e. opposite to the normal direction of travel A.

This backwards movement has the advantage that the shielding beams 12 are moved further backwards to provide more shielding of the processing members 9 towards the back of the agricultural machine 1.

In the shielding position of the shielding beams 12 in the shown embodiment, the shielding beams 12 extend at the backside of the agricultural machine 1 beyond the processing members 9 carried, in the transport position, by the central bearing arm part 7. As a result, the shielding beams 12 provide shielding of the processing members 9 up to and passed the back end corners of the agricultural machine 1.

At the front side of the agricultural machine, an elongate rod shaped shielding element 22 is provided. The shielding element 22 is connected with both front ends of the shielding beams 12 to provide a shielding of the processing members 9 at the front end and front parts of the sides of the agricultural machine 1.

A shielding element support frame 23 is mounted on a front side of the frame 2 to provide a stationary mounting location 24 for pivotable support of the shielding element 22 at the front side in a fixed position with respect to the frame 2. The ends 25 of the shielding element 22 are slidably and rotatably mounted in a sliding groove 26 mounted on the shielding beams 12, so that the ends 25 will follow, but not hinder, movement of the shielding beams 12 between the lower position and the shielding position.

The advantage of the stationary mounting location 24 of the shielding element 22 is that the front end of the shielding element 22 does not move forwards when the shielding beams 12 are brought from the shielding position to the lower position. When the shielding element 12 would be allowed to move forward, it may interfere with the movement of a pulling vehicle pulling the agricultural machine 1, in particular when the combination of pulling vehicle and the agricultural machine 1 are not aligned with respect to each other, for example when the combination makes a turn.

The height of the mounting location 24 is selected such that in the shielding position of the shielding beams 12, the shielding element 22 runs substantially horizontally and substantially at the same height as the shielding beams 12.

The combination of the shielding beams 12 and the shielding element 22 provide a continuous shielding of the processing members 9 at the front end, at opposite sides, and at the corner areas of a back end of the agricultural machine 1, as shown in Figure 6.

The front and back ends of the shielding beams are provided with a plate shaped marking object 27 to mark a corner and/or side of the agricultural machine 1.

When the shielding beams 12 are arranged in the shielding position, the presence of the shielding beams 12 may prevent or hinder movement of the processing members between the operating position and the transport position. In particular the unfolding of the bearing arms 8 with respect to the central bearing arm part 7 may not be carried out when the shielding beams 12 are positioned in the shielding position.

In a non-claimed embodiment, to avoid that the folding and unfolding actuator or actuators that actuate the folding and unfolding of the bearing arms 8 are inadvertently actuated, when the shielding beams 12 are in the shielding position, the agricultural machine 1 comprises a safety device configured to avoid that the actuator or actuators that actuate the folding and unfolding of the bearing arms 8 can be actuated when the shielding beams 12 are in the shielding position. The safety device comprises a shut-off valve 28 arranged in a hydraulic drive circuit of the folding and unfolding actuator or actuators. The shut-off valve 28 is movable between a closed position and an open position.

In the non-claimed embodiment, the shut-off valve 28 is mechanically linked to the rotation arm 21 of the actuator 13 so that the shut-off valve 28 is arranged in the closed position when the shielding beams 12 are in the shielding position, and the shut-off valve 28 is arranged in the open position when the shielding beams are in the lower position.

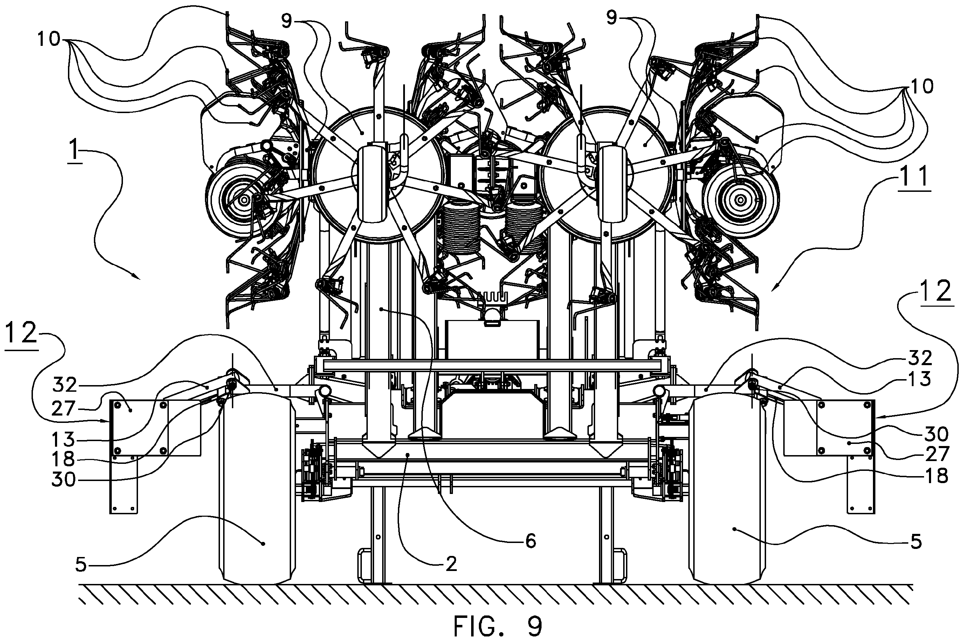

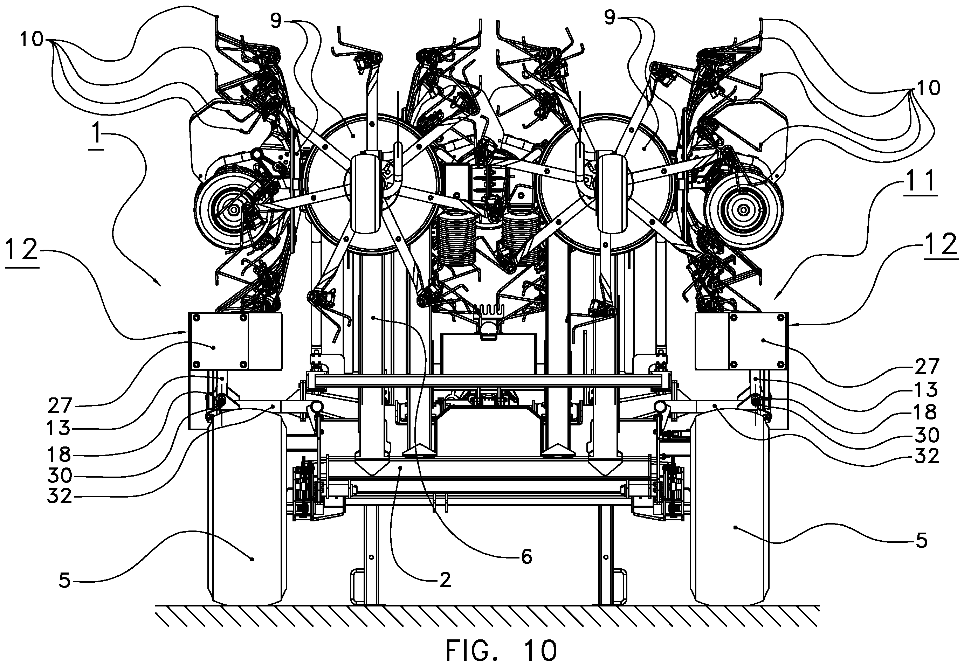

Figures 6 - 10 show side views and back end views of an alternative embodiment of a haymaking machine according to the invention. The same parts or parts having the same or substantially the same function are indicated by corresponding reference numerals as used in Figures 1-6.

The haymaking machine 1 of Figures 6 - 10 is configured to ted a crop. When the haymaking machine 1 is coupled to a tractor or the like, it can be pulled in a normal direction of travel A. The haymaking machine 1 comprises a bearing arm construction having a pivotable bearing arm support frame 6, a central bearing arm part 7 and two bearing arms 8. The bearing arm construction is, similarly to the embodiment of Figures 1-6, movable to move the processing members 9 between an operating position and a transport position. Main difference is that in the bearing arm construction of Figures 6-10, the bearing arms carry more processing members 9 and are pivotable.

In the transport position, the processing members 9 are folded up in order to take up a position which is convenient for transportation. This transport position results in the processing elements 10 protruding sideways from the haymaking machine 1 and thus causing a potential risk of injury to people or animals or of damage to objects.

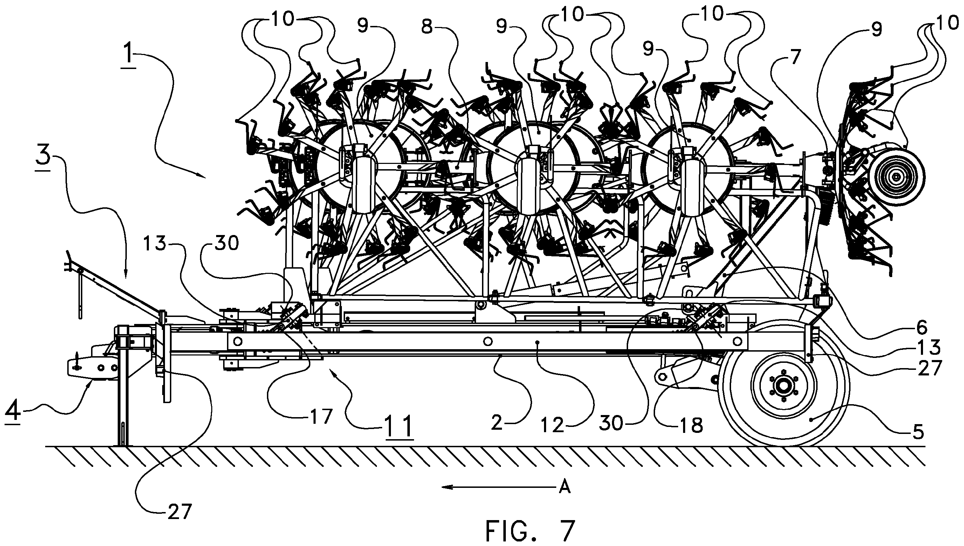

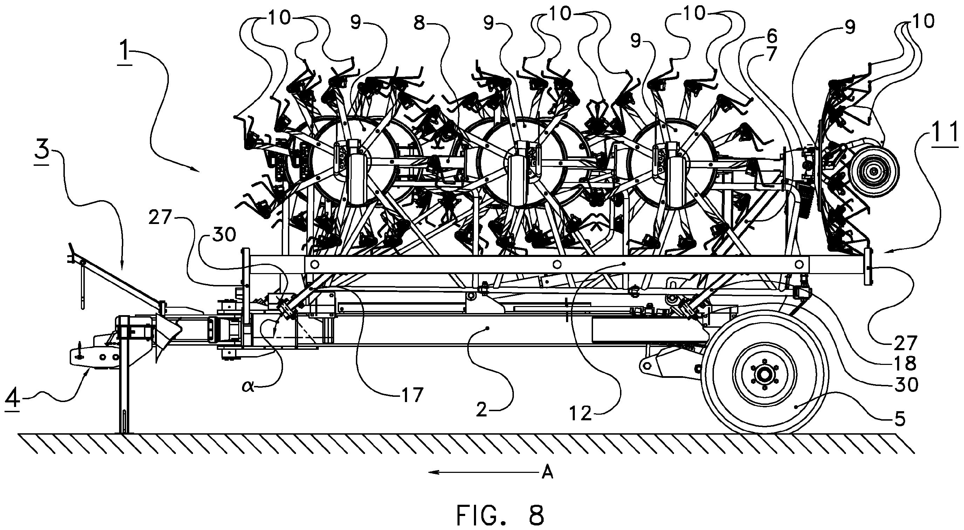

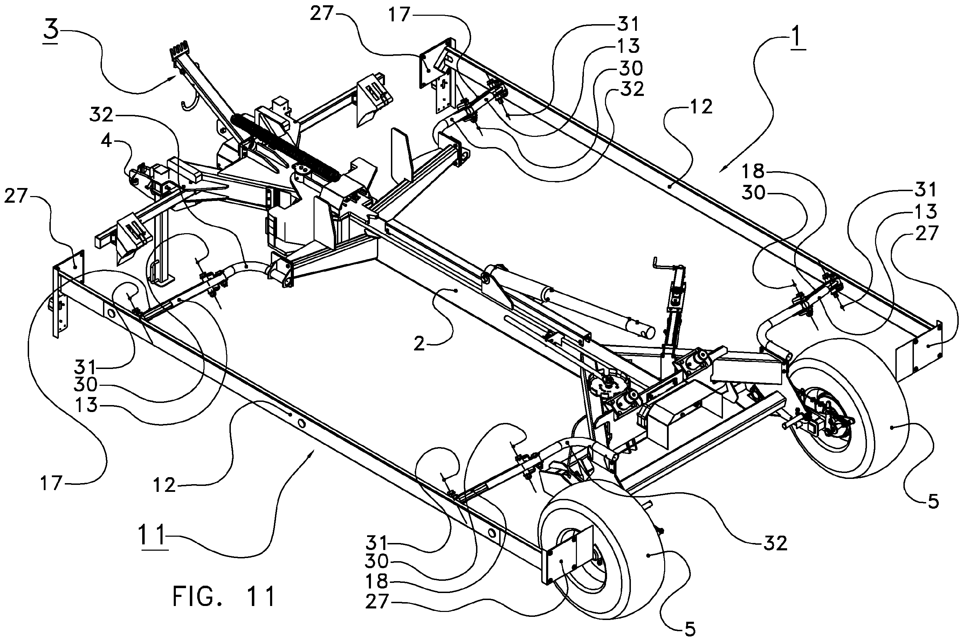

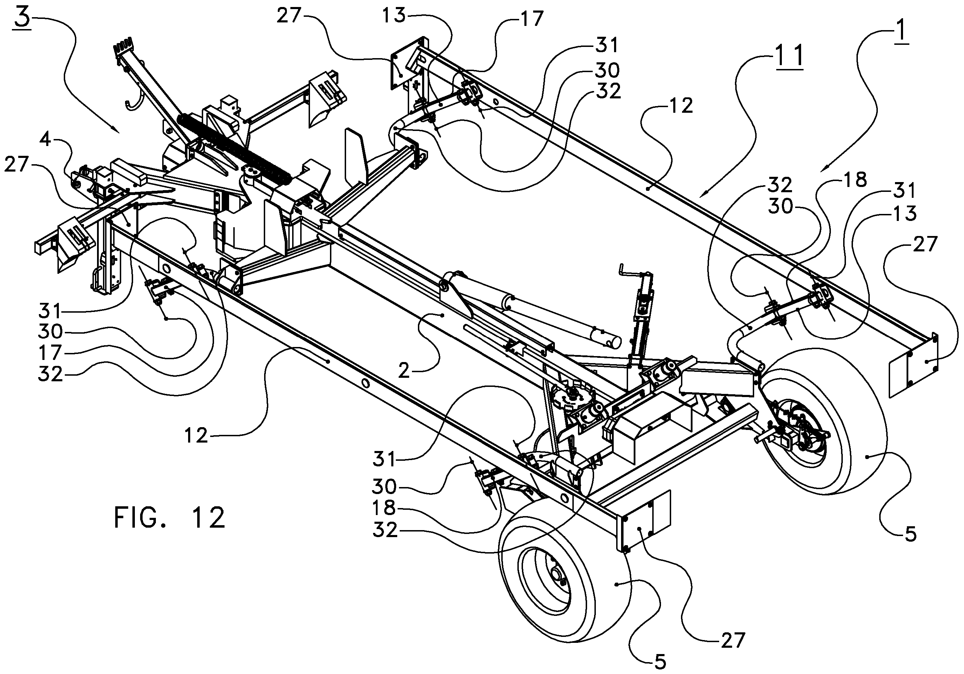

The agricultural machine 1 comprises a movable shielding construction 11 to shield the processing members 9 during transport. The shielding construction 11 comprises at each of opposite sides of the agricultural machine 1 a shielding beam 12 movable between a lower position, shown in Figures 7, 9 and 11, and a shielding position, shown in Figures 8, 10 and 12.

In the shielding position, the shielding beams 12 are arranged at a height in the range from 1 meters up to 2 meters, preferably at a height in the range from 1.2 meters to 1.7 meters. In this height range, the shielding beams 12 may prevent that a person is directly hit by one the processing elements 10. This desired height of the shielding beams 12 may prevent or hinder movement of the processing members between the operating position and the transport position. By moving the shielding beams 12 to the lower position, the shielding beams 12 may no longer hinder or prevent movement of the processing members between the operating position and the transport position.

To move the shielding beams 12 between the lower position and the shielding position, each shielding beam 12 is mounted on a front link arm 17 and a back link arm 18.

The frame 2, front link arm 17, back link arm 18 and the shielding beam 12, at each side of the agricultural machine 1 form a four-bar link mechanism. By simultaneous tilting movements of the front link arm 17 and the back link arm 18, at one side of the agricultural machine 1 will result in that the shielding beam 12 at that side will move between the shielding position and the lower position, wherein the shielding beam 12 remains orientated substantially horizontally.

The frame 2 comprises frame beams 32 at the end of which pivot axes 30 are provided to pivotably support the front and back link arms 17, 18. Each of the front link arms 17 and back link arms 18 is pivotably movable with respect to the frame 2 about such pivot axis 30 to make movement between the shielding position and lower position possible. The pivot axes 30 extend in a substantially vertical plane and are arranged at an acute angle α with respect to the horizontal plane normal direction of travel A. As a result of the acute angle α, the shielding beams 12 will move upwards, backwards with respect with the normal direction of travel A and towards each other, when the shielding beam 12 is moved from the lower position to the shielding position.

Correspondingly, the shielding beams 12 will move downwards, forwards with respect with the normal direction of travel A and away from each other, when the shielding beams 12 is moved from the shielding position to the lower position.

The acute angle α is in the shown embodiment about 45 degrees, but may vary in other embodiments in dependence on the desired ratio between displacements in the different directions upwards, backwards and sidewards in the movement of the shielding beam 12 from the lower position to the shielding position and vice versa. The angle may for example be in the range 20 to 70 degrees, preferably 35 to 55 degrees.

The shielding beams 12 are pivotably mounted on the front link arm 17 and the back link arm 18 at second pivot axes 31 to maintain the same orientation of the shielding beams 12 in the lower position and the shielding position. The angle of the pivot axes 30 and the second pivot axes substantially correspond.

For each of the front link arms 17 and back link arms 18, an hydraulic actuator 13 is provided to move the shielding beam 12 between the lower position and the shielding position. In alternative embodiments, other actuators or actuator arrangements may be provided to move the shielding beams 12 between the lower position and the shielding position.

The shielding beams 12, when moved from the lower position to the shielding position, will also move backwards, i.e. opposite to the normal direction of travel A. This backwards movement has the advantage that the shielding beams 12 are moved further backwards to provide more shielding of the processing members 9 towards the back of the agricultural machine 1. In the shielding position of the shielding beams 12 in the shown embodiment, the shielding beams 12 extend at the backside of the agricultural machine 1 beyond the processing members 9 carried, in the transport position, by the central bearing arm part 7. As a result, the shielding beams 12 provide shielding of the processing members 9 up to and passed the back end corners of the agricultural machine 1.

When the shielding beams 12 are arranged in the shielding position, the presence of the shielding beams 12 may prevent or hinder movement of the processing members between the operating position and the transport position. In particular the unfolding of the bearing arms 8 with respect to the central bearing arm part 7 may not be carried out when the shielding beams 12 are positioned in the shielding position. A non-claimed safety device (not shown) may be provided to prevent movement of the bearing arm construction to or from the transport position, when the shielding beams 12 are in the transport position.

Hereinabove, embodiments of a movable shielding construction for a haymaking machine hace been described. Such movable shielding construction may also be used in any other agricultural machine to shield its proccesing members, such as for example a soil cultivation machine, a planting machine or harvesting machine having processing members to be shielded in a transportation position.

The processing members may be movably, in particular rotatably, connected to the bearing arm construction, or may be fixedly connected to the bearing arm construction.

Other embodiments of the invention will be apparent to those skilled in the art from consideration of the specification and practice of the invention disclosed herein. It is intended that the specification and examples be considered as exemplary only, with a true scope of the invention being indicated by the following claims.
- 1: - haymaking machine
- 2: - frame
- 3: - front end of the frame
- 4: - coupling device
- 5: - wheels
- 6: - bearing arm support frame
- 7: - central bearing arm part
- 8: - bearing arm
- 9: - crop-processing members
- 10: - processing elements
- 11: - movable shielding construction
- 12: - shielding beam
- 13: - hydraulic linear actuator
- 14: - drive mechanism
- 15: - first drive axle
- 16: - second drive axles
- 17: - front link arm
- 18: - back link arm
- 19: - rotation transfer arm
- 20: - connection rod
- 21: - rotation arm
- 22: - shielding element
- 23: - shielding element support frame
- 24: - mounting location
- 25: - ends of the shielding element
- 26: - sliding groove
- 27: - plate shaped marking object
- 28: - a shut-off valve
- 30: - pivot axis
- 31: - second pivot axis
- 32: - frame beam
- A: - normal direction of travel

## Claims

1. An agricultural machine (1) comprising:
- a frame (2) which is configured to be attached to a vehicle in order to move the agricultural machine (1) in a normal direction of travel (A),
- a bearing arm construction (6, 7, 8) having at least one bearing arm (8), which bearing arm construction is pivotably connected to the frame (2) so as to be pivotable about one or more pivot axes, and
- a plurality of processing members (9) with processing elements (10) for working the land or processing a crop, wherein the processing members (9) are at least displaceable between an operating position and a transport position by pivoting of the least one bearing arm construction about the one or more pivot axes,
wherein the agricultural machine (1) comprises a movable shielding construction (11) to at least partially shield the processing members (9) in the transport position, wherein the movable shielding construction comprises two shielding beams (12) located at opposite sides of the agricultural machine, wherein the shielding beams are movable between a shielding position for shielding at least partially the processing members (9), and a lower position in which movement of the processing members between the operating position and the transport position is possible, wherein the movable shielding construction (11) is configured to move the shielding beams (12) upwards and backwards with respect to the normal direction of travel (A) when the shielding beams are moved from the lower position to the shielding position, **characterized in that** the movable shielding construction (11) comprises at each side two pivotable link arms (17, 18) connecting the respective shielding beam (12) to the frame (2), wherein the frame, link arms and shielding beam, at each side of the agricultural machine, form a planar four-bar linkage.

2. The agricultural machine (1) of claim 1, wherein the movable shielding construction (11) is configured to move the shielding beams (12) in a substantially vertical plane between the lower position and the shielding position.

3. The agricultural machine (1) of claim 1, wherein the movable shielding construction (11) is configured to move the shielding beams (12) in a slanted plane between the lower position and the shielding position.

4. The agricultural machine (1) of claim 3, wherein the slanted plane is substantially parallel to the normal direction of travel.

5. The agricultural machine (1) of any of the claims 1, 3 or 4, wherein the movable shielding construction (11) is configured to move the shielding beams (12) towards each other when the shielding beams are moved from the lower position to the shielding position.

6. The agricultural machine (1) of any of the claims 1-5, wherein the shielding beams (12), in the shielding position, extend at the backside of the agricultural machine up to or beyond the processing members (9) in the transport position.

7. The agricultural machine (1) of any of the claims 1-6, wherein the planar four-bar linkage is a parallelogram four-bar linkage.

8. The agricultural machine (1) of any of the claims 1-7, wherein the pivotable link arms are pivotable about pivot axes substantially perpendicular to the normal direction of travel to obtain a movement of the shielding beams (12) in a substantially vertical plane between the lower position and the shielding position, or wherein the pivotable link arms are pivotable about pivot axes extending in a substantially vertical plane and arranged at an acute angle with respect to the normal direction of travel to obtain a movement of the shielding beams (12) in a slanted plane between the lower position and the shielding position.

9. The agricultural machine (1) of any of the preceding claims, wherein the movable shielding construction (11) comprises an actuator (13) to move the movable shielding construction between the lower position and the shielding position.

10. The agricultural machine (1) of claim 9, wherein the movable shielding construction (11) comprises a drive mechanism (14) to transfer an actuator movement of the actuator (13) into movement of the movable shielding construction (11) between the lower position and the shielding position.

11. The agricultural machine (1) of claim 9 or 10, wherein the actuator (13) is a hydraulic actuator.

12. The agricultural machine (1) of any of the preceding claims, wherein the movable shielding construction (11) comprises an elongate shielding element (22) connecting the two opposite shielding beams (12) to shield the front side of the processing members (9) in transport position.

13. The agricultural machine (1) of claim 12, wherein a front side of the elongate shielding element (22) is pivotably mounted at a fixed mounting location (24), and wherein both ends (25) of the elongate shielding element are slidably connected to the shielding beams.

14. The agricultural machine (1) of any of the preceding claims, wherein at least one end of the shielding beams (12) is arranged on a corner of the agricultural machine to serve as a marking device which marks a corner and/or side of the agricultural machine (1).

15. The agricultural machine (1) of any of the preceding claims, wherein the movable shielding construction is configured to provide continuous shielding of processing members (9) at a front end, at opposite sides, and at at least corner areas of a back end of the agricultural machine.

16. The agricultural machine (1) of any of the preceding claims, wherein the shielding beams (12), when positioned in the shielding position, are arranged at a height in the range from 1 meters up to 2 meters, preferably at a height in the range from 1.2 meters to 1.7 meters.

## Patentansprüche

1. Landwirtschaftliche Maschine (1), mit:
einem Rahmen (2), der für eine Befestigung an einem Fahrzeug zum Bewegen der landwirtschaftlichen Maschine (1) in einer normalen Fahrtrichtung (A) konfiguriert ist,
einer Lagerarmkonstruktion (6, 7, 8) mit mindestens einem Lagerarm (8), wobei die Lagerarmkonstruktion so schwenkbar mit dem Rahmen (2) verbunden ist, dass sie um eine oder mehrere Schwenkachsen verschwenkbar ist, und
einer Mehrzahl von Verarbeitungseinheiten (9) mit Verarbeitungselementen (10) zum Bearbeiten der Erde oder zum Verarbeiten von Erntegut, wobei die Verarbeitungseinheiten (9) zumindest zwischen einer Arbeitsstellung und einer Transportstellung veränderbar sind, indem die mindestens eine Lagerarmkonstruktion um die eine oder mehrere Schwenkachsen verschwenkt wird,
wobei die landwirtschaftliche Maschine (1) eine bewegliche Abschirmungskonstruktion (11) aufweist, um die Verarbeitungseinheiten (9) zumindest teilweise in der Transportstellung abzuschirmen, wobei die Abschirmungskonstruktion zwei Abschirmungsbalken (12) aufweist, die an entgegengesetzten Seiten der landwirtschaftlichen Maschine angeordnet sind, wobei die Abschirmungsbalken zwischen einer Abschirmungsstellung zum mindestens teilweisen Abschirmen der Verarbeitungseinheiten (9) und einer unteren Stellung bewegbar sind, in der eine Bewegung der Verarbeitungseinheiten zwischen der Arbeitsstellung und der Transportstellung möglich ist, wobei die bewegliche Abschirmungskonstruktion (11) konfiguriert ist, um die Abschirmungsbalken (12) relativ zu der normalen Fahrtrichtung (A) nach oben und nach hinten zu bewegen, wenn die Abschirmungsbalken von der unteren Stellung in die Abschirmungsstellung bewegt werden, **dadurch gekennzeichnet, dass**
die bewegliche Abschirmungskonstruktion (11) an jeder Seite zwei schwenkbare Verbindungsarme (17, 18) aufweist, die den entsprechenden Abschirmungsbalken (12) mit dem Rahmen (2) verbinden, wobei der Rahmen, die Verbindungsarme und die Abschirmungsbalken an jeder Seite der landwirtschaftlichen Maschine eine flächige 4-Balken-Verbindungseinrichtung bilden.

2. Landwirtschaftliche Maschine (1) nach Anspruch 1, wobei die bewegliche Abschirmungskonstruktion (11) konfiguriert ist, um die Abschirmungsbalken (12) in einer im Wesentlichen vertikalen Ebene zwischen der unteren Stellung und der Abschirmungsstellung zu bewegen.

3. Landwirtschaftliche Maschine (1) nach Anspruch 1, wobei die bewegliche Abschirmungskonstruktion (11) konfiguriert ist, um die Abschirmungsbalken (12) in einer geneigten Ebene zwischen der unteren Stellung und der Abschirmungsstellung zu bewegen.

4. Landwirtschaftliche Maschine (1) nach Anspruch 3, wobei die geneigte Ebene im Wesentlichen parallel zu der normalen Fahrtrichtung verläuft.

5. Landwirtschaftliche Maschine (1) nach mindestens einem der Ansprüche 1, 3 oder 4, wobei die bewegliche Abschirmungskonstruktion (11) konfiguriert ist, um die Abschirmungsbalken (12) aufeinander zu zu bewegen, wenn die Abschirmungsbalken von der unteren Stellung in die Abschirmungsstellung bewegt werden.

6. Landwirtschaftliche Maschine (1) nach mindestens einem der Ansprüche 1-5, wobei sich die Abschirmungsbalken (12) in der Abschirmungsstellung an der Hinterseite der landwirtschaftlichen Maschine bis zu den Verarbeitungseinheiten (9) in der Transportstellung oder über diese hinaus erstrecken.

7. Landwirtschaftliche Maschine (1) nach mindestens einem der Ansprüche 1-6, wobei die flächige 4-Balken-Verbindungseinheit eine parallelogrammförmige 4-Balken-Verbindungseinheit ist.

8. Landwirtschaftliche Maschine (1) nach mindestens einem der Ansprüche 1-7, wobei die schwenkbaren Verbindungsarme um Schwenkachsen verschwenkbar sind, die sich im Wesentlichen senkrecht zu der normalen Fahrtrichtung erstrecken, um eine Bewegung der Abschirmungsarme (12) zwischen der unteren Stellung und der Abschirmungsstellung in einer im wesentlichen vertikalen Ebene zu erhalten, oder wobei die schwenkbaren Verbindungsarme um Schwenkachsen verschwenkbar sind, die sich im Wesentlichen in einer vertikalen Ebene erstrecken und unter einem spitzen Winkel zu der normalen Fahrtrichtung angeordnet sind, um eine Bewegung der Abschirmungsarme (12) in einer geneigten Ebene zwischen der unteren Stellung und der Abschirmungsstellung zu erhalten.

9. Landwirtschaftliche Maschine (1) nach mindestens einem der vorhergehenden Ansprüche, wobei die schwenkbare Abschirmungskonstruktion (11) einen Aktuator (13) aufweist, um die bewegliche Abschirmungskonstruktion zwischen der unteren Stellung und der Abschirmungsstellung zu bewegen.

10. Landwirtschaftliche Maschine (1) nach Anspruch 9, wobei die bewegliche Abschirmungskonstruktion (11) einen Antriebsmechanismus (14) aufweist, um eine Aktuatorbewegung des Aktuators (13) in eine Bewegung der beweglichen Abschirmungskonstruktion (11) zwischen der unteren Stellung und der Abschirmungsstellung umzusetzen.

11. Landwirtschaftliche Maschine (1) nach Anspruch 9 oder 10, wobei der Aktuator (13) ein hydraulischer Aktuator ist.

12. Landwirtschaftliche Maschine (1) nach mindestens einem der vorhergehenden Ansprüche, wobei die bewegliche Abschirmungskonstruktion (11) ein langgestrecktes Abschirmungselement (22) aufweist, das die zwei gegenüberliegenden Abschirmungsbalken (12) verbindet, um die Vorderseite der Verarbeitungseinheiten in der Transportstellung abzuschirmen.

13. Landwirtschaftliche Maschine (1) nach Anspruch 12, wobei eine Vorderseite des langgestreckten Abschirmungselements (42) an einem festen Lagerort (24) schwenkbar gelagert ist, und wobei die beide Enden (25) des langgestreckten Abschirmungselements gleitend bzw. verschieblich mit den Abschirmungsbalken verbunden sind.

14. Landwirtschaftliche Maschine (1) nach mindestens einem der vorhergehenden Ansprüche, wobei mindestens ein Ende der Abschirmungsbalken (12) an einer Ecke der landwirtschaftlichen Maschine angeordnet ist, um als Markierungsvorrichtung zu dienen, die eine Ecke und/oder eine Seite der landwirtschaftlichen Maschine (1) markiert.

15. Landwirtschaftliche Maschine (1) nach mindestens einem der vorhergehenden Ansprüche, wobei die bewegliche Abschirmungskonstruktion konfiguriert ist, um eine kontinuierliche Abschirmung der Verarbeitungseinheiten (9) an einem vorderen Ende, an gegenüberliegenden Seiten und an zumindest Eckbereichen eines hinteren Endes der landwirtschaftlichen Maschine bereitzustellen.

16. Landwirtschaftliche Maschine (1) nach mindestens einem der vorhergehenden Ansprüche, wobei die Abschirmungsbalken (12), wenn sich diese in der Abschirmungsstellung befinden, auf einer Höhe in dem Bereich von 1 m bis 2 m, vorzugsweise auf einer Höhe in dem Bereich zwischen 1,2 m bis 1,7 m, angeordnet sind.

## Revendications

1. Machine agricole (1) comprenant :
un châssis (2) qui est configuré de manière à être couplé à un véhicule afin de déplacer la machine agricole (1) dans une direction normale de déplacement (A),
une construction de bras de palier (6, 7, 8) comportant au moins un bras de palier (8), laquelle construction de bras de palier est couplée de manière à pouvoir pivoter au châssis (2) afin de pouvoir pivoter par rapport à un ou plusieurs axes de pivot, et
une pluralité d'éléments de traitement (9) comportant des éléments de traitement (10) destinés à travailler la terre ou à traiter une récolte, dans laquelle les éléments de traitement (9) peuvent être déplacés au moins entre une position active et une position de transport en faisant pivoter la au moins une construction de bras de palier par rapport aux un ou plusieurs axes de pivot,
dans laquelle la machine agricole (1) comprend une construction de protection mobile (11) destinée à protéger au moins partiellement les éléments de traitement (9) dans la position de transport,
dans laquelle la construction de protection mobile comprend deux poutrelles de protection (12) situées sur des côtés opposés de la machine agricole, dans laquelle les poutrelles de protection peuvent être déplacées entre une position de protection destinée à protéger au moins partiellement les éléments de traitement (9), et une position inférieure dans laquelle le mouvement des éléments de traitement entre la position active et la position de transport est possible,
dans laquelle la construction de protection mobile (11) est configurée de manière à déplacer les poutrelles de protection (12) vers le haut et vers l'arrière par rapport à la direction normale de déplacement (A) lorsque les poutrelles de protection sont déplacés à partir de la position inférieure vers la position de protection, **caractérisée en ce que** la construction de protection mobile (11) comprend de chaque côté, deux bras de liaison pouvant pivoter (17, 18) reliant la poutrelle de protection (12) respective au châssis (2), dans laquelle les châssis, bras de liaison et poutrelle de protection, de chaque côté de la machine agricole, forment un ensemble de liaison plan à quatre barres.

2. Machine agricole (1) selon la revendication 1, dans laquelle la construction de protection mobile (11) est configurée de manière à déplacer les poutrelles de protection (12) dans un plan sensiblement vertical entre la position inférieure et la position de protection.

3. Machine agricole (1) selon la revendication 1, dans laquelle la construction de protection mobile (11) est configurée de manière à déplacer les poutrelles de protection (12) dans un plan incliné entre la position inférieure et la position de protection.

4. Machine agricole (1) selon la revendication 3, dans laquelle le plan incliné est sensiblement parallèle à la direction normale de déplacement.

5. Machine agricole (1) selon l'une quelconque des revendications 1, 3 ou 4, dans laquelle la construction de protection mobile (11) est configurée de manière à déplacer les poutrelles de protection (12) l'une vers l'autre lorsque les poutrelles de protection sont déplacées à partir de la position inférieure vers la position de protection.

6. Machine agricole (1) selon l'une quelconque des revendications 1 à 5, dans laquelle les poutrelles de protection (12), dans la position de protection, s'étendent à l'arrière de la machine agricole jusqu'aux éléments de traitement (9), ou au-delà de ces derniers, dans la position de transport.

7. Machine agricole (1) selon l'une quelconque des revendications 1 à 6, dans laquelle l'ensemble de liaison plan à quatre barres est un ensemble de liaison à quatre barres en parallélogramme.

8. Machine agricole (1) selon l'une quelconque des revendications 1 à 7, dans laquelle les bras de liaison pouvant pivoter peuvent pivoter par rapport aux axes de pivot sensiblement perpendiculaires à la direction normale de déplacement afin d'obtenir un mouvement des poutrelles de protection (12) dans un plan sensiblement vertical entre la position inférieure et la position de protection, ou dans laquelle les bras de liaison pouvant pivoter peuvent pivoter par rapport aux axes de pivot s'étendant dans un plan sensiblement vertical et agencés sous un angle aigu par rapport à la direction normale de déplacement afin d'obtenir un mouvement des poutrelles de protection (12) dans un plan incliné entre la position inférieure et la position du châssis.

9. Machine agricole (1) selon l'une quelconque des revendications précédentes, dans laquelle la construction de protection mobile (11) comprend un actionneur (13) afin de déplacer la construction de protection mobile entre la position inférieure et la position de protection.

10. Machine agricole (1) selon la revendication 9, dans laquelle la construction de protection mobile (11) comprend un mécanisme d'entraînement (14) afin de transférer un mouvement d'actionneur de l'actionneur (13) en un mouvement de la construction de protection mobile (11) entre la position inférieure et la position de protection.

11. Machine agricole (1) selon la revendication 9 ou 10, dans laquelle l'actionneur (13) est un actionneur hydraulique.

12. Machine agricole (1) selon l'une quelconque des revendications précédentes, dans laquelle la construction de protection mobile (11) comprend un élément de protection allongé (22) reliant les deux poutrelles de protection (12) opposées afin de protéger la partie avant des éléments de traitement (9) dans la position de transport.

13. Machine agricole (1) selon la revendication 12, dans laquelle un côté avant de l'élément de protection allongé (22) est monté de manière à pouvoir pivoter au niveau d'un emplacement de montage fixe (24), et dans laquelle les deux extrémités (25) de l'élément de protection allongé sont reliées de manière à pouvoir coulisser aux poutrelles de protection.

14. Machine agricole (1) selon l'une quelconque des revendications précédentes, dans laquelle au moins une extrémité des poutrelles de protection (12) est agencée au niveau d'un angle de la machine agricole afin de servir de dispositif de repérage qui repère un angle et/ou un côté de la machine agricole (1).

15. Machine agricole (1) selon l'une quelconque des revendications précédentes, dans laquelle la construction de protection mobile est configurée de manière à assurer une protection continue des éléments de traitement (9) au niveau d'une extrémité avant, sur des côtés opposés, et au moins des zones d'angle d'une extrémité arrière de la machine agricole.

16. Machine agricole (1) selon l'une quelconque des revendications précédentes, dans laquelle les poutrelles de protection (12), lorsqu'elles sont placées dans la position de protection, sont agencées à une hauteur comprise dans la plage de 1 mètre à 2 mètres, de préférence, à une hauteur comprise dans la plage de 1,2 mètres à 1,7 mètres.
